# EUROPEAN PATENT APPLICATION

(11) **EP 2 107 458 A1**
(43) Date of publication of application: **07.10.2009**
(21) Application number: 08103262.5
(22) Date of filing: 31.03.2008
(51) Int. Cl.: G06F 9/445

(54) **Modelling software appliance**

(71) Applicant: JATHO INVESTMENTS, 38000 Grenoble (FR)
(72) Inventor: Bourdon, Olivier, 38000 Grenoble (FR)
(74) Representative: Tetaz, Franck Claude Edouard

(57) **Abstract**

The present invention relates to a method of creation of a software appliance remarkable in that it comprises at least the step of modelling the software appliance. Said step of modelling comprises the step of defining the following set of categories:
- Install Profile which is a description of the software used to install the Operating System that allows users to streamline the installation process of the Software Appliance to suit their needs,
- OS Profile which is a description of the OS packages that are installed as part of the Software Stack, said OS Profile 6 being based on an already known OS distribution and containing the packages the Software Appliance needs to support the Infrastructure and Application layers,
- Projects which is a description of all the open source middleware or third-party products and projects that this Software Appliance contains,
- My Packages which is a description of any additional packages added by the user to construct the Software Appliance,
- The Appliance Profile which is a set of meta-data providing an overall description of the Software Appliance, such as owner and/or company information and/or licence.

## Description

The present invention is generally directed to software tools or software frameworks that are used to facilitate and automate the entire life-cycle of a Software Appliances or pre-integrated software stacks. Modelling software appliances is providing a consistent and repeatable way of managing the entire life-cycle of a software appliance. This includes the automated software stack generation, validation, acceptance testing, reporting and maintenance stages.

In the field of computing industry, it is well known software appliance which is described as a set of software products that integrate an operating system, middleware components and one or several applications functionality into an easily managed composite package that is deployed on industry-standard client or server hardware either on a virtual machine or directly on the hardware.

A software appliance is a software application combined with an operating system as well as additional software appliance value-add such as the required installation hooks, software pre-configuration, software update mechanisms, easy backup, installation wizard and more for it to run optimally on industry standard hardware, or in a virtual machine. The Software appliance value-add programs simplify server applications by minimizing the tasks typically associated with installation, configuration, deployment, acceptance testing, reporting, backup and maintenance.

It is also common practice that software appliances only include only the pieces of an operating system required to support a particular application and other third-party components contained in the appliance. In this way, the appliance is more efficient, smaller, more secure and higher performing than an application running under a full general purpose Operating System.

A software appliance can be installed by a vendor on a piece of hardware prior to delivery to the customer, thereby creating a hardware appliance solution. The primary value to the customer remains the simplicity of purchase, deployment and maintenance.

A software appliance can be packaged in a virtual machine format as a virtual appliance, allowing it to be run within a virtual machine player or within a hypervisor such as VMware ESX or Xen.

Software Appliances are becoming ubiquitous for evaluation purposes, with a push from key IT Industry players to use them in real deployments. As this trend continues, more tools will become available to help create and administrate Software Appliances.

Nevertheless, there are no methodologies, processes or models available today to describe the contents of a complete software appliance or a complete pre-integrated software stack. Consequently there are no tools to allow you to automatically assemble the contents and manage consistently the product life-cycle of a software appliance.

As a result, creating a software appliance involves manually installing the operating system and the application packages, and then packaging them together into a particular format with add-on appliance programming so that the ensemble can be re-installed easily on another hardware system or virtual machine.

Pre-Installation and pre-Configuration of the applications within the software appliance are done prior to this packaging. Today the creation of a software appliance is done manually. Consequently when a new complete version of the Software Appliance is to be released, as part of the Software Appliance life-cycle, all the steps to create the new Software Appliance must be done from scratch.

Furthermore, as this is manual, it is prone to human error and is time-consuming. In the case where the number of applications within the Software Appliance increases, these problems rise exponentially.

As Software Appliances become mainstream, there is a need for software appliances whose creation is easy, repeatable and extendable to allow rapid creation of new software appliances as well as quick version updates.

The above-mentioned need is addressed by the embodiments described herein in the following description.

Accordingly, the present invention provides according to a first aspect a method of creation of a software appliance remarkable in that it comprises at least the step of modelling the software appliance.

Said step of modelling comprises the step of defining the following set of categories :
- Install Profile which is a description of the software used to install the Operating System that allows users to streamline the installation process of the Software Appliance to suit their needs,
- OS Profile which is a description of the OS packages that are installed as part of the Software Stack, said OS Profile being based on an already known OS distribution and containing the packages the Software Appliance needs to support the Infrastructure and Application layers,
- Projects which is a description of all the open source middleware or third-party products and projects that this Software Appliance contains,
- My Packages which is a description of any additional packages added by the user to construct the Software Appliance,
- The Appliance Profile which is a set of meta-data providing an overall description of the Software Appliance, such as owner and/or company information and/or licence.

Said Install Profile provides the meta-data description of the installation process of the Software Appliance on the target machine or virtual machine which is used to select the correct mini-root program that installs the Software Appliance packages.

Moreover, the Software Appliance packages include the Operating System (OS), the infrastructure and the application layer packages.

Said OS Profile is based on a standard OS distribution, providing a sub-set of packages for the Software Appliance to operate.

Moreover, the OS Profile provides all the data describing the Operating System packages for the Software Appliance including the OS distribution features present, languages supported, version, size and architecture type.

Said projects are open source infrastructure middleware, applications or third party products or projects that have already been qualified on a particular OS distribution, each distribution and distribution profile having a list of projects that is supported.

Moreover, project provides all the data describing one particular third party product or project compiled for a particular OS distribution.

The "My Packages" category is open source or proprietary software created, maintained and qualified for the OS distribution by the user creating the Software Appliance, said software being either infrastructure or application software.

"My Packages" contains zero or a plurality of "My Project" structures, each holding all the relevant information including name, version, OS distribution compiled for, package list and dependency list.

The Appliance Profile stores relevant meta-data on the Software Appliance itself.

The collection groups together several of the main structures together containing the main package content of the Software Appliance.

The appliance structure holds the entire meta-data information of a particular Software Appliance.

Accordingly, the present invention provides according to a second aspect a programmable storage device having program instructions stored thereon for causing a programmable control device to perform a method according to the invention.

The present invention further provides an application programming for creating a software appliance remarkable in that it comprises at least means for modelling the software appliance.

Said means for modelling the software appliance comprises at least the following set of categories :
- Install Profile which is a description of the software used to install the Operating System that allows users to streamline the installation process of the Software Appliance to suit their needs,
- OS Profile which is a description of the OS packages that are installed as part of the Software Stack, said OS Profile being based on an already known OS distribution and containing the packages the Software Appliance needs to support the Infrastructure and Application layers,
- Projects which is a description of all the third-party products and projects that this Software Appliance contains,
- My Packages which is a description of any additional packages added by the user to construct the Software Appliance,
- The Appliance Profile which is a set of meta-data providing an overall description of the Software Appliance, including owner and company information.

The model of a Software Appliance according to the invention includes at least the description of the software components that comprise the Software Appliance, dependencies between these software components, the installation and configuration methods of the Software Appliance and the appliance meta-data (for example information on company who constructed the appliance, license agreement, etc...).

Such a model provides the means for the industry to create the required tools to simplify the entire life-cycle of the Software Appliance from initial creation, updates to maintenance. Using the information contained in this model, tools will be able to provide developers notably :
- The means to easily assemble software components into a software appliance. Different creation methods may be proposed, for example in a top-down approach or bottom-up. Dependencies between software components will be automatically checked to ensure consistency.
- Provide creation of new software appliances from an already existing software appliance (or template) allowing developers to include their value-add quickly and easily.
- Allow instant creation of a new version (update) of a software appliance. By having a knowledge-base of software components and the complete description of the software appliance it is conceivable that a tool could automatically re-assemble a new version of the software appliance updating current software components automatically to the latest release.
- Enable easier and automated field maintenance of a complete software appliance by comparing the software appliance model with his new version. By having the knowledge of the software appliance model it is becoming possible to automatically propose some field maintenance fixes, updates, upgrade, and best practices.

Embodiments of varying scope are described herein. In addition to the aspects described in this summary, further aspects will become apparent by reference to the drawings and with reference to the detailed description that follows.
- Figure 1 illustrates the software appliance stack in the method of modelling a software appliance according to the invention,
- Figure 2 illustrates the software appliance model according to the invention,
- Figure 3 illustrates the operating system profile model according to the invention,
- Figure 4 illustrates the projects data model according to the invention,
- Figure 5 illustrates the "my packages" data model according to the invention,
- Figure 6 illustrates the Appliance data model according to the invention,
- Figure 7 illustrates the collection data model according to the invention,
- Figure 8 illustrates the appliance data model according to the invention,
- Figure 9 illustrates the method to create a software appliance according to the invention,

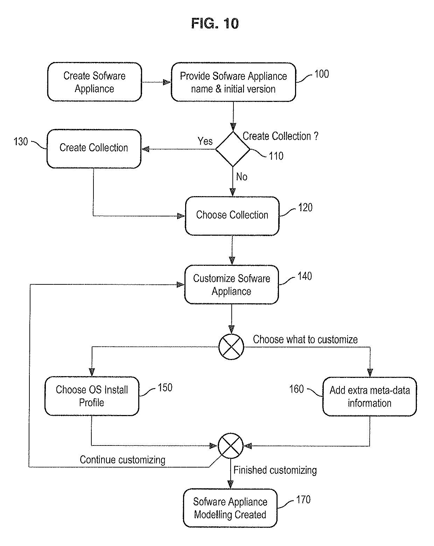

- Figure 10 illustrates the software appliance creation process according to the invention,
- Figure 11 illustrates the collection creation process according to the invention.

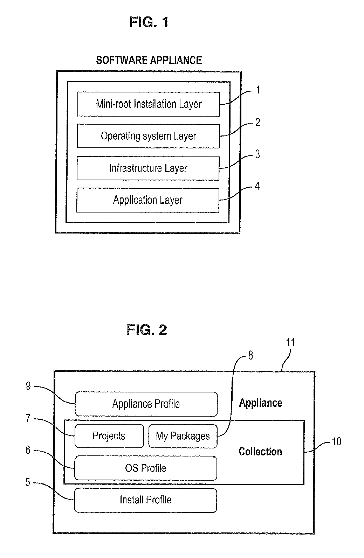

Referring to figure 1, a Software Appliance is a group of packages that can be split into four categories : Mini-root Installation Layer 1 which is the software used to install the Operating System onto the target system or virtual machine, the Operating System Layer 2 which is the set of OS packages that is a subset of a full OS distribution, the Infrastructure Layer 3 which is a set of middleware software packages, and the Application Layer 4 which is a set of application software packages.

This is a classical view of a Software Appliance or Software Stack.

To model a Software Appliance according to the invention, referring to figure 2, we define another set of categories. These are the install profile 5, the OS Profile 6, the projects 7, "my packages" 8 and the appliance profile 9.

The Install Profile 5 is a description of the software used to install the Operating System. This allows users to choose from different installation profiles or/and streamline the installation process of the Software Appliance to suit their needs

The OS Profile 6 is a description of the OS packages that are installed as part of the Software Stack. An OS Profile 6 is based on an already known OS distribution such as Fedora Core 7®, Ubuntu® or OpenSUSE for example. This profile only contains the packages the Software Appliance needs to support the Infrastructure and Application layers.

The Projects 7 is a description of all middleware open source or third- party software products that this Software Appliance contains. These products and projects may live in either the Infrastructure or Application layer of the Software Appliance

My Packages 8 is a description of any additional packages added by the user to construct the Software Appliance. These additional packages may be other products and projects that are proprietary to the user creating this Software Appliance.

The Appliance Profile 9 is a set of meta-data providing an overall description of the Software Appliance, including owner and company information.

These component profiles are grouped into two larger categories, namely a collection 10 and the appliance 11.

Nevertheless, the component profiles can either be grouped in any larger categories or in more than two larger categories without departing of the scope of the invention.

The collection 10 comprises an OS Profile, zero or more projects and zero or more of "My Packages". This category describes all the packages that are actually installed on the target system or virtual machine. By doing this, the user may create multiple Software Appliances with the same content by just changing the installation mechanism, for example an evaluation version (having a quick streamlined installation process) or an advanced version (having a flexible installation process) targeting different customers.

The appliance 11 comprises the collection plus the Install Profile and Appliance Profile. In other words this contains all the data for the Software Appliance

Said Install Profile 5 provides the meta-data description of the installation process of the Software Appliance on the target machine or virtual machine. Modelling the installation of the software enables to select or streamline the installation experience of the Software Appliance to suit needs. This information is used to select the correct mini-root 1 program (figure 1) that installs the Software Appliance packages (including OS, infrastructure and application layer packages). The Install Profile 5 provides information that will be used by default during the installation process.

This information includes among others :
- The licence agreements you wish to display during the installation
- The default language you wish the Operating System to use
- The default disk partitioning to use
- Network device configuration to use by default if no DHCP server is detected
- Time zone setup
- Default root password
- Welcome message once the installation process is completed
- Re-skinning and re-branding information (images and text)

The Install Profile 5 allows the user creating the Software Appliance to do some of these steps automatically to provide a more streamlined installation process, for example pre-define the root password to a particular value or the language the OS is to use by default. Furthermore it allows the user to add or change the licence agreements that are displayed in the installation process as well as provide re-skinning information to re-brand the installation as well as change the welcome screen message.

Said OS Profile 6 is based on a standard OS distribution, providing a sub-set of packages for the Software Appliance to operate properly. This allows the Software Appliance to contain only the relevant packages reducing the footprint and therefore resources required on the target machine to run it.

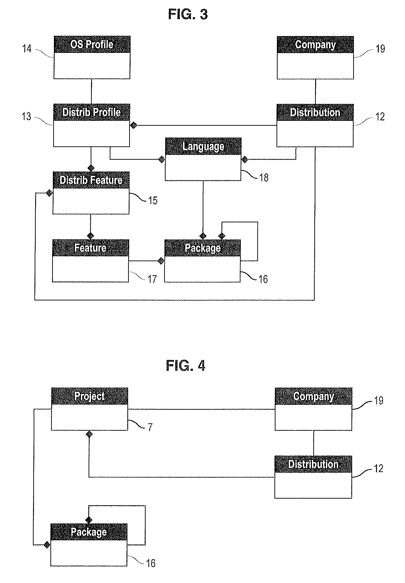

The OS Profile 6 provides all the data describing the Operating System packages for the Software Appliance. The data includes the OS distribution features present (including the Services and devices), languages supported, version, size and architecture type. An OS Profile is described by the data model illustrated in Figure 3. These structures are distribution 12, distribution profile 13, OS profile 14, Distribution feature 15, Package 16, Feature 17, Language 18 and Company 19.

The distribution 12 is a structure holding all the information of a full Operating System distribution, for example Fedora® or Ubuntu®. This includes all the supported languages 18, components and features this distribution has as well as Company 19 information.

The Distribution Profile 13 consists in predefined profiles that hold a subset of packages of a full OS distribution. This is a streamlined OS distribution targeting a specific purpose. Distribution Profiles 13 may include, Standard Profile, Server Profile, Desktop Profile or Minimal.

The OS Profile 14 is a customized Distribution Profile, with possible further streamlining, for example the removal of several languages not required to reduce the footprint further.

The Distribution Feature 15 is a structure that holds the information of one specific feature within the Operating System, for example a device or a service. Each Feature provides the required package list.

The Package 16 is a structure that holds all the information of a package, including name, size, architecture and dependencies on other packages.

Referring to figures 2 and 4, the projects 7 are third party products or projects that have already been qualified on a particular OS distribution. Each distribution and distribution profile has a list of projects that is supported.

This allows users to quickly construct Software Appliances with well known third party products and projects easily. Projects can either be infrastructure or application software.

A Project 7 provides all the data describing one particular third party product or project compiled for a particular OS distribution as shown in figure 4.

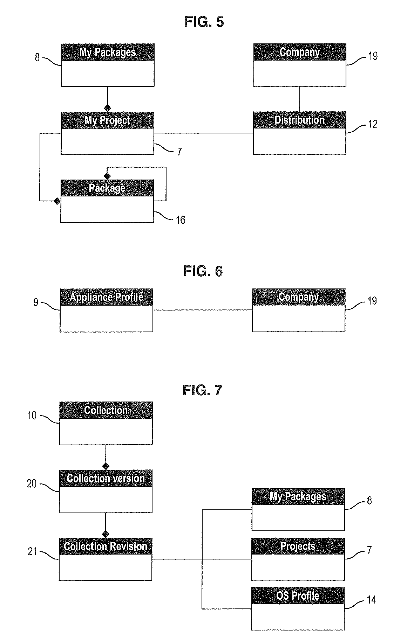

Referring to figures 2 and 5, the "My Packages" 8 category is very similar to Projects 7, however this is open source or proprietary software created, maintained and qualified for the OS distribution by the user creating the Software Appliance. This software can either be infrastructure or application software. "My Packages" 8 contains zero or more "My Project" 7 structures, each holding all the relevant information including name, version, OS distribution compiled for, package list and dependency list as shown in figure 5.

Referring to figure 2 and 6, the Appliance Profile 9 stores relevant meta-data on the Software Appliance itself. This information includes a summary and detailed description of the Software Appliance (target audience, instructions etc), pointers to relevant documentation and company information as shown in figure 6.

Referring to figures 2 and 7, the collection 10 groups together several of the main structures together containing the main package content of the Software Appliance. This includes an OS Profile 14, zero or more Projects 7 and zero or more "My Packages" 8. The Collection 10 also stores global versioning information, collection version 20 and collection revision 21, to allow maintenance and update tracking of the Collection meta-data. Version information includes a global version number that is maintained by the creator of the Software Appliance and a revision number maintained internally for every saved update done on the Software Appliance meta-data at Collection level. For example, a user may wish to create an initial Software Appliance as version 3.1. Updates to this Software Appliance are tracked internally as revision updates, namely revision 1,2,3 and so on. The Software Appliance may release as version 3.1 rev 4. All the life-cycle history of the Software Appliance is stored. This version information is stored in specific structure types.

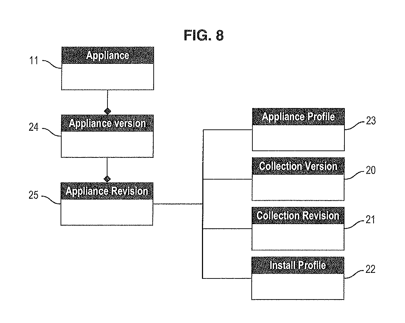

Referring to figures 2 and 8, the appliance 11 structure holds the entire meta-data information of a particular Software Appliance. This includes the specific collection version 20 and collection revision 21 used as well as the Install Profile 22 and Appliance Profiles 23. Like a collection 10, the Appliance structure 11 stores global versioning information, appliance version 24 and appliance revision 25, to allow maintenance and update tracking Version information includes a global version number that is maintained by the creator of the Software Appliance and a revision number maintained internally for every saved update done on the Software Appliance meta-data at Appliance level. This version information is stored in specific structure types as shown in figure 8.

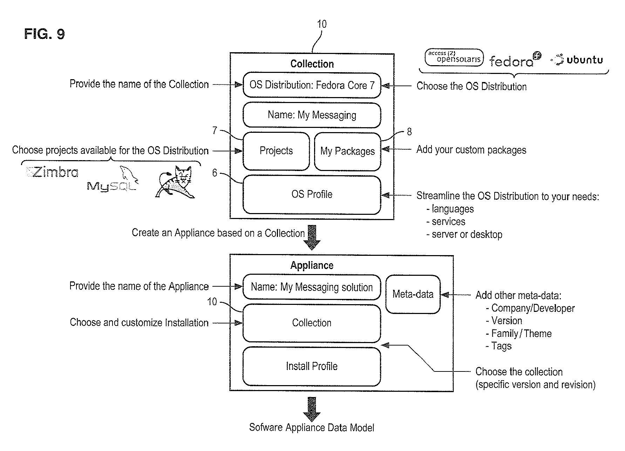

Referring to figure 9, a Software Appliance can be created by firstly describing it in its entirety. A collection 10 is created by choosing the OS distribution such as Fedora® or Ubuntu® for example and by providing the name of the collection 10. Then, projects 7 available for the OS Distribution are chosen and custom packages 8 are added. Subsequently, the method streamline the OS Distribution to the user needs such as languages, services, server or desktop for example and an appliance based on the collection 10 is created.

Subsequently, the name of the appliance is provided, the collection (specific version and revision) is chosen, the install profile is chosen and customized if necessary, and meta-data such as the company and/or developer name, the version, the family and/or the theme, or tags for example are eventually added to create a software appliance data model according to the invention.

This meta-data can then be used by an algorithm to retrieve the required software products and packages and construct the Software Appliance full stack in a specific format for delivery (for example ISO (Bootable DVD Format), VMware, or Xen). This method suits server-side creation of Software Appliances (for example Web Services) allowing a user to piece together the Software Appliance components as meta-data, selecting the required OS Profile and Projects as well as adding his own packages to create a Collection and finally an Appliance. The actual package binaries for the Operating System and projects are not required to be downloaded at the client-side and for the user to construct the Software Appliance manually. The Software Appliance contents have been modelled and can be used by the server side software dynamically once the user is happy with the contents.

One interesting aspect of modelling the Software Appliance contents is that the Software Appliance can be created in two ways, namely top-down or bottom-up.

In a top-down approach the user chooses firstly the application and infrastructure components, namely the Projects and "My Packages" that is part of the Software Appliance. At this stage a mechanism is put in place to check all the software dependencies these packages require, automatically choosing the correct OS Profile to satisfy these dependency requirements.

Furthermore the mechanism can also alert the user to any infrastructure and application packages that are still missing. This technique is targeted to users who have knowledge in the infrastructure and application layers of the Software Appliance.

In a bottom-up approach, the user creates an OS Profile from a full OS distribution, removing the services, devices and languages not required. A mechanism can again check dependencies with currently known Projects and propose those projects that can be safely used in the current OS Profile.

The process to create a Software Appliance's data model is straightforward. In a first step 100, some initial information, including the Software Appliance's name and version to use are provided. Then, in a step 110 you require choosing the collection this Software Appliance is based on. An existing collection can be chosen (step 120), or a new collection can be created (step 130). A new collection can be created as described hereinafter. After the collection has been chosen, the Software Appliance's install profile can be further customized in a step 140 to streamline the user installation experience, and also provide extra meta-data information (including Company/developer information, version, category etc). For example, the user can customize the OS profile in a step 150 and/or add extra meta-data information in a step 160. When the customization is finished, the software appliance modelling is created in a step 170. One the modelling is created the automated creation of the complete software appliance stack can easily be produced in different packaging types such as Bootbale DVD (iso image) or a Virtual Appliance Image File.

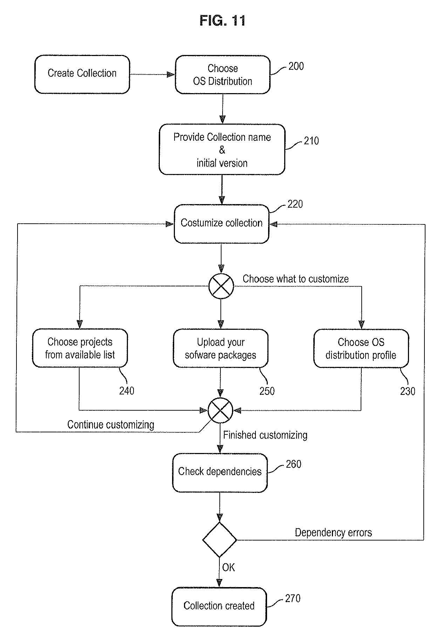

Figure 11 illustrate the creation of the collection 10 that holds all the package information for the OS distribution profile, projects and user specific packages uploaded.

The first step 200 in the process to create the collection 10 is to choose the OS distribution the collection will be based on, as well as the collection name and initial version information (step 210). The collection can be customized, in a step 220 by choosing a specific OS distribution profile (step 230); add projects (step 240) and/or upload your own software packages (step 250). After customization, the package dependencies are checked in a step 260 to ensure that no dependant packages are missing in the collection. If there are errors, the collection requires further customizations (step 220) until all the required packages are present. Once dependency checking (step 260) is successful, the collection 10 is created (step 270) and can be used in a Software Appliance.

It will be noted that, by having a consistent data-model for the complete software appliance software stack, integration tools will become possible, and more importantly the life cycle of a Software Appliance (update and maintenance) will become possible to handle automatically.

### Example:

The appliance to be created is a Web Application showcasing an Employee Directory Application. The appliance will be used in one of the company's go-to-market programs to boost the number of customers evaluating the product. This go-to-market program will be launched in France and the UK, consequently it must support the French and English languages. The appliance should be easy to use allowing non-technical personnel to use it during road shows and customer demonstrations, therefore the installation and deployment needs to be automated.

### Appliance content

The example stack is deployed using the following components :
- **Operating System** : Linux Fedora Core 8
- **Open source Projects :**
   ○ Apache HTTPD Web server
   ○ PHP scripting language
   ○ OpenLDAP Directory Server
- **Application :** The Web Application is composed of a set of php files archived in a zip file and called MyApplianceApp.zip.

### Modelling the Appliance

### Appliance Model

- **Name :** MyAppliance
- **Version :** 1.0
- **Collection :**
   ○ Name : MyAppliance-Collection
   ○ Version 1.0
- **Install Profile :**
   ○ Fully automated ( default values will be used)ages and text)

### Collection Model

- **Name :** MyAppliance-Collection
- **Version :** 1.0
- **OS Profile :**
   ○ **Distribution :** Fedora Core 8
   ○ **Distribution Profile :**
      ■ No desktop required (Server Profile)
      ■ Languages : English and French
      ■ Default Fedora services installed (ftp,ssh ...)
- **Projects :**
   ○ Apache Web Server
   ○ PHP scripting language
   ○ OpenLDAP Directory Server
- **My Packages :**
   ○ MyApplianceApp.zip file

This written description uses examples to disclose the invention, including the best mode, and also to enable any person skilled in the art to make and use the invention. The scope of the subject matter described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. Method of creation of a software appliance **characterized in that** it comprises at least the step of modelling the software appliance.

2. Method according to claim 1 **characterized in that** the step of modelling comprises the step of defining the following set of categories :
- Install Profile (5) which is a description of the software used to install the Operating System that allows users to streamline the installation process of the Software Appliance to suit their needs,
- OS Profile (6) which is a description of the OS packages that are installed as part of the Software Stack, said OS Profile (6) being based on an already known OS distribution and containing the packages the Software Appliance needs to support the Infrastructure and Application layers,
- Projects (7) which is a description of all the open source middleware or third-party products and projects that this Software Appliance contains,
- My Packages (8) which is a description of any additional packages added by the user to construct the Software Appliance,
- The Appliance Profile (9) which is a set of meta-data providing an overall description of the Software Appliance, such as owner and/or company information and/or licence.

3. Method according to claim 2 **characterized in that** said Install Profile (5) provides the meta-data description of the installation process of the Software Appliance on the target machine or virtual machine which is used to select the correct mini-root (1) program that installs the Software Appliance packages.

4. Method according to claim 3 **characterized in that** the Software Appliance packages include the Operating System (OS), the infrastructure and the application layer packages.

5. Method according to any claim 2 to 4 **characterized in that** said OS Profile (6) is based on a standard OS distribution, providing a sub-set of packages for the Software Appliance to operate.

6. Method according to claim 5 **characterized in that** the OS Profile (6) provides all the data describing the Operating System packages for the Software Appliance including the OS distribution features present, languages supported, version, size and architecture type.

7. Method according to any claim 2 to 6 **characterized in that** the projects (7) are open source infrastructure middleware, applications or third party products or projects that have already been qualified on a particular OS distribution, each distribution and distribution profile having a list of projects that is supported.

8. Method according to claim 7 **characterized in that** a project (7) provides all the data describing one particular third party product or project compiled for a particular OS distribution.

9. Method according to any claim 2 to 8 **characterized in that** the "My Packages" (8) category is open source or proprietary software created, maintained and qualified for the OS distribution by the user creating the Software Appliance, said software being either infrastructure or application software.

10. Method according to claim 9 **characterized in that** "My Packages" 8 contains zero or a plurality of "My Project" (7) structures, each holding all the relevant information including name, version, OS distribution compiled for, package list and dependency list.

11. Method according to any claim 2 to 10 **characterized in that** the Appliance Profile (9) stores relevant meta-data on the Software Appliance itself.

12. Method according to any claim 2 to 11 **characterized in that** the collection (10) groups together several of the main structures together containing the main package content of the Software Appliance.

13. Method according to any claim 2 to 11 **characterized in that** the appliance (11) structure holds the entire meta-data information of a particular Software Appliance.

14. A programmable storage device having program instructions stored thereon for causing a programmable control device to perform a method according to any one of claims 1 through 13.

15. An application programming for creating a software appliance **characterized in that** it comprises at least means for modelling the software appliance.

16. Application programming according to claim 15 **characterized in that** said means for modelling the software appliance comprises at least the following set of categories :
- Install Profile (5) which is a description of the software used to install the Operating System that allows users to streamline the installation process of the Software Appliance to suit their needs,
- OS Profile (6) which is a description of the OS packages that are installed as part of the Software Stack, said OS Profile (6) being based on an already known OS distribution and containing the packages the Software Appliance needs to support the Infrastructure and Application layers,
- Projects (7) which is a description of all the third-party products and projects that this Software Appliance contains,
- My Packages (8) which is a description of any additional packages added by the user to construct the Software Appliance,
- The Appliance Profile (9) which is a set of meta-data providing an overall description of the Software Appliance, including owner and company information.
